# EUROPÄISCHE PATENTSCHRIFT

(11) **EP 0 567 737 B1**
(45) Veröffentlichungstag und Bekanntmachung des Hinweises auf die Patenterteilung: **27.11.1996**
(21) Anmeldenummer: 93103004.3
(22) Anmeldetag: 26.02.1993
(51) Int. Cl.: C07F 7/18

(54) **2-Methyl-3-chlorpropyl-cyclohexyldialkoxysilane und Verfahren zu ihrer Herstellung**
2-methyl-3-chloropropyl-cyclohexyldialkoxysilane and process for its preparation
2-méthyl-3-chloropropyl-cyclohexyldialkoxysilane et procédé pour sa préparation

(30) Priorität: 29.04.1992 DE 4214134
(43) Veröffentlichungstag der Anmeldung: 03.11.1993
(73) Patentinhaber: HÜLS AKTIENGESELLSCHAFT, 45764 Marl (DE)
(72) Erfinder: Lillig, Bernhard, Dr., W-7888 Rheinfelden (DE); Seiler, Claus-Dietrich, Dr., W-7888 Rheinfelden (DE)

(56) Entgegenhaltungen:
- CH-A- 569 029
- US-A- 4 097 511
- JOURNAL OF ORGANOMETALLIC CHEMISTRY, Band 417, 1991; R. TACKE et al., Seiten 339-353

## Beschreibung

Die Erfindung betrifft 2-Methyl-3-chlorpropyl-cyclohexyldialkoxysilane und ein verfahren zur Herstellung dieser Verbindungen.
Der Erfindung lag das Problem zugrunde, neue difunktionelle Diorganosilan-Verbindungen aufzufinden. Hierbei wurden insbesondere solche Verbindungen angestrebt, die im Molekül neben einem nicht-reaktiven Rest, z.B. einer Alkyl- oder Cycloalkylgruppe, einen solchen Rest besitzen, der ein Schlüsselatom, vorzugsweise ein Chloratom, zur Einführung funktioneller Gruppen aufweist.
Die Einführung der gewünschten funktionellen Gruppen kann dabei nach Eingliederung des Moleküls, welches das Schlüsselatom enthält, in Siloxanketten oder aber in die Ausgangsverbindung erfolgen.
Das Problem wurde durch Synthese der bisher nicht bekannten 2-Methyl-3-chlorpropyl-cyclohexyldialkoxysilane der allgemeinen Formel I 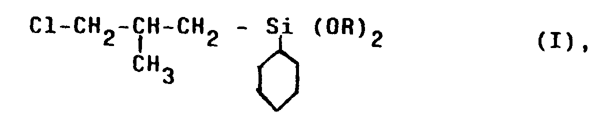 in welcher R für Alkylreste mit 1 bis 6 C-Atomen steht, die gegebenenfalls Sauerstoffatome in der Rette enthalten, gelöst. Die neuen Dialkoxysilane der allgemeinen Formel I werden in an sich bekannter Weise durch Umsetzung von 2-Methyl-3-chlorpropyl-cyclohexyldichlorsilan mit den entsprechenden Alkoholen hergestellt.
Bei chargenweiser Veresterung des 2-Methyl-3-chlorpropyl-cyclohexyldichlorsilans wird der Alkohol unter Rühren in vorgelegtes Chlorsilan eingeleitet und das Chlorsilan stufenweise unter Austreiben des bis zur letzten Veresterungsstufe gebildeten Chlorwasserstoffs umgesetzt. Zu diesem Zweck wird das System in der letzten Veresterungsstufe bis auf Siedetemperatur gebracht. Die Veresterung kann auch in Gegenwart von Lösungsmitteln durchgeführt werden, die in beliebiger Konzentration zugegen sein können. Als Lösungsmittel werden Kohlenwasserstoffe, beispielsweise Heptan oder Toluol, aber auch mit besonderer Effektivität Chlorkohlenwasserstoffe, beispielsweise Di- oder Trichlorethylen, eingesetzt. Lösungsmittel werden vorzugsweise angewendet, wenn man Alkohole umsetzt, welche Sauerstoffatome in der Alkylkette enthalten. Die Siedetemperatur des Systems kann durch Anwendung von Unterdruck herabgesetzt werden.

Die kontinuierliche Herstellung von 2-Methyl-3-chlorpropyl-cyclohexyldialkoxysilanen erfolgt durch Umsetzung des Chlorsilans mit Alkoholen und Entfernung des bei der Umsetzung entstehenden Chlorwasserstoffes in einem Reaktor und einer sich daran anschließenden Kolonne, die von gasförmigem Alkohol durchströmt wird und auf deren Kopf das den Reaktor verlassende Reaktionsgemisch aufgegeben wird. Vom unteren Ende der Kolonne wird das Endprodukt entnommen. Bei dieser Verfahrensweise wird das Chlorsilan in flüssiger Form dem Reaktor zugeführt, die entsprechende stöchiometrische Menge Alkohol gasförmig in den unteren Teil der Kolonne aufgegeben und am Kolonnenkopf kondensierter Alkohol in den Reaktor zurückgeführt. Die kontinuierliche Verfahrensweise wird bei der Veresterung des Chlorsilans mit kurzkettigen Alkoholen bevorzugt.
Die erfindungsgemäßen Verbindungen werden für die Modifizierung von Siliconen verwendet.

### Beispiel 1

### Herstellung von 2-Methyl-3-chlorpropyl-cyclohexyldimethoxysilan

Ein 6-Liter-Vierhalskolben wird in eine Pilzheizhaube eingesetzt und mit einem Rührer, einem Rückflußkühler, einem Tropftrichter und einem Thermometer ausgestattet. In den Kolben werden 1367 g (5 Mol) 2-Methyl-3-chlorpropyl-cyclohexyldichlorsilan zusammen mit 900 ml Trichlorethylen vorgelegt und unter Rühren zum Sieden erwärmt. Innerhalb von 90 Minuten werden 160 g (5 Mol) Methanol unterhalb der Flüssigkeitsoberfläche eingeleitet. Nachdem das System weitere 20 Minuten bei Rückflußtemperatur gehalten wurde, werden innerhalb von nochmals 90 Minuten abermals 160 g (5 Mol) Methanol zugeführt. Danach wird noch 20 Minuten am Rückfluß gekocht und anschließend das Rohprodukt destillativ im Vakuum aufgearbeitet.
Die Struktur der neuen Verbindung wurde durch Elementar- und gaschromatographische/massenspektrometrische (GC/MS) Analyse identifiziert.

| | | |
|---|---|---|
| Molekulargewicht: | theoretisch | 264,5 g/mol |
| | gefunden | 267,4 g/mol |

| | | |
|---|---|---|
| Elementaranalyse: | theoretisch | gefunden |
| C | 54,5 Gew.-% | 54,7 Gew.-% |
| H | 9,4 Gew.-% | 9,3 Gew.-% |
| Si | 10,6 Gew.-% | 10,4 Gew.-% |
| Cl | 13,4 Gew.-% | 13,3 Gew.-% |
| O | 12,1 Gew.-% | 12,3 Gew.-% |

Das vorliegende Produkt besitzt demzufolge die Formel

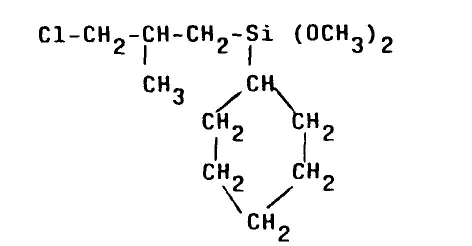

### Beispiel 2

### Herstellung von 2-Methyl-3-chlorpropyl-cyclohexyldi(2-methoxy-ethoxy)silan

Die Apparatur ist identisch derjenigen im Beispiel 1. 1367 g (5 Mol) 2-Methyl-3-chlorpropyl-cyclohexyldichlorsilan werden mit 900 ml 1,2-Dichlorethylen vorgelegt. Die Veresterung wird wie in Beispiel 1 beschrieben durchgeführt.Anstelle von Methanol werden zwei Portionen 2-Methoxy-ethanol in Mengen zu je 380 g (5 Mol) eingesetzt.
Das erhaltene Rohprodukt wird destillativ im Vakuum aufgearbeitet. Die Struktur der neuen Verbindung wurde durch Elementar- und GC/MS-Analyse identifiziert.

| | | |
|---|---|---|
| Molekulargewicht: | theoretisch | 352,5 g/mol |
| | gefunden | 356,2 g/mol |

| | | |
|---|---|---|
| Elementaranalyse: | theoretisch | gefunden |
| C | 54,5 Gew.-% | 54,8 Gew.-% |
| H | 9,4 Gew.-% | 9,5 Gew.-% |
| Si | 7,9 Gew.-% | 7,8 Gew.-% |
| Cl | 10,1 Gew.-% | 10,1 Gew.-% |
| O | 18,1 Gew.-% | 17,8 Gew.-% |

Das vorliegende Produkt besitzt demzufolge die Formel

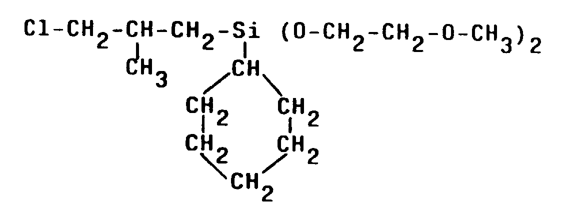

### Beipiel 3

### Herstellung von 2-Methyl-3-chlorpropyl-cyclohexyldipropoxysilan

Die Apparatur ist identisch derjenigen im Beispiel 1. 1367 g (5 Mol) 2-Methyl-3-chlorpropyl-cyclohexyldichlorsilan werden vorgelegt. Bei einer Starttemperatur von 60°C werden innerhalb von 140 Minuten 300 g (5 Mol) n-Propanol mit gleichmäßiger Geschwindigkeit zugeführt. Anschließend wird in 120 Minuten auf 145°C aufgeheizt, wobei gelöster Chlorwasserstoff entweicht. Das System wird von diesem Zeitpunkt an soweit evakuiert, daß es bei einer Sumpftemperatur von 145°C zu sieden beginnt. In den siedenden Reaktionsansatz werden weitere 300 g (5 Mol) n-Propanol im Verlauf von 140 Minuten eindosiert. Nach Ablauf einer Nachreaktionszeit von 35 Minuten wird das Rohprodukt destillativ im Vakuum aufgearbeitet.

Die Struktur der neuen Verbindung wurde durch Elementar- und GC/MS-Analyse identifiziert.

| | | |
|---|---|---|
| Molekulargewicht: | theoretisch | 320,5 g/mol |
| | gefunden | 327,2 g/mol |

| | | |
|---|---|---|
| Elementaranalyse: | theoretisch | gefunden |
| C | 59,9 Gew.-% | 59,6 Gew.-% |
| H | 10,3 Gew.-% | 10,4 Gew.-% |
| Si | 8,7 Gew.-% | 8,5 Gew.-% |
| Cl | 11,1 Gew.-% | 11,3 Gew.-% |
| O | 10,0 Gew.-% | 10,2 Gew.-% |

Das vorliegende Produkt besitzt demzufolge die Formel

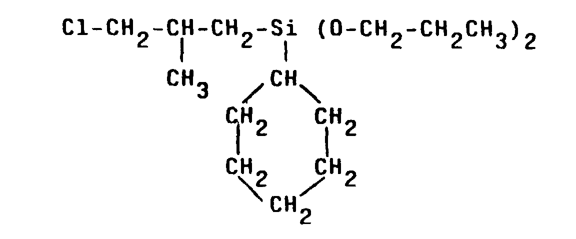

### Beispiel 4

### Herstellung von 2-Methyl-3-chlorpropyl-cyclohexyldihexoxysilan

Die Apparatur ist identisch derjenigen im Beispiel 1. 1367 g (5 Mol) 2-Methyl-3-chlorpropyl-cyclohexyldichlorsilan werden zusammen mit 900 ml Hexan vorgelegt. Der Veresterungsablauf wird wie in Beispiel 1 beschrieben durchgeführt. Anstelle von Methanol werden zwei Portionen n-Hexanol zu je 510 g (5 Mol) eingesetzt. Das Rohprodukt wird destillativ im Vakuum aufgearbeitet. Die Struktur der neuen Verbindung wurde durch Elementar- und GC/MS-Analyse identifiziert.

| | | |
|---|---|---|
| Molekulargewicht: | theoretisch | 404,5 g/mol |
| | gefunden | 398,4 g/mol |

| | | |
|---|---|---|
| Elementaranalyse: | theoretisch | gefunden |
| C | 65,3 Gew.-% | 65,1 Gew.-% |
| H | 11,1 Gew.-% | 11,3 Gew.-% |
| Si | 6,9 Gew.-% | 7,0 Gew.-% |
| Cl | 8,8 Gew.-% | 8,6 Gew.-% |
| O | 7,9 Gew.-% | 8,0 Gew.-% |

Das vorliegende Produkt besitzt demzufolge die Formel

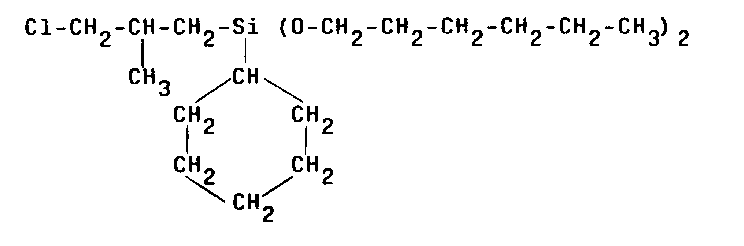

### Beispiel 5

### Herstellung von 2-Methyl-3-chlorpropyl-cyclohexyldi(2-(2-methoxy-ethoxy)-ethoxy-)silan

Die Apparatur ist identisch derjenigen im Beispiel 1. 1367 g (5 Mol) 2-Methyl-3-chlorpropyl-cyclohexyldichlorsilan werden zusammen mit 900 ml Hexan vorgelegt. Der Veresterungsablauf wird wie in Beispiel 1 beschrieben durchgeführt. Anstelle von Methanol werden zwei Portionen Methyldiglykol(2-(2-methoxyethoxy-)ethanol) in Mengen zu je 600 g (5 Mol) eingesetzt. Das Rohprodukt wird destillativ im Vakuum aufgearbeitet. Die Struktur der neuen Verbindung wurde durch Elementar- und GC/MS-Analyse identifiziert.

| | | |
|---|---|---|
| Molekulargewicht: | theoretisch | 440,5 g/mol |
| | gefunden | 444,3 g/mol |

| | | |
|---|---|---|
| Elementaranalyse: | theoretisch | gefunden |
| C | 54,5 Gew.-% | 54,7 Gew.-% |
| H | 9,3 Gew.-% | 9,1 Gew.-% |
| Si | 6,4 Gew.-% | 6,3 Gew.-% |
| Cl | 8,0 Gew.-% | 8,2 Gew.-% |
| O | 21,8 Gew.-% | 21,7 Gew.-% |

Das vorliegende Produkt besitzt demzufolge die Formel

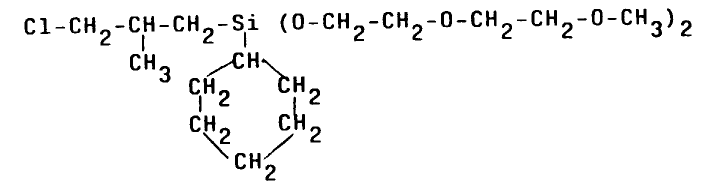

### Beispiel 6

### Herstellung von 2-Methyl-3-chlorpropyl-cyclohexyldiethoxysilan

In einen 40-Liter-Reaktor mit Rührer, zwei Tauchrohren und solebetriebenem Wärmetauscher werden 10 Liter 2-Methyl-3-chlorpropyl-cyclohexyldiethoxysilan vorgelegt. Über einen mengengesteuerten Durchflußmesser werden 80 Mol Ethanol pro Stunde in den unteren Teil einer Kolonne gasförmig eingeleitet. Die Kolonne besitzt eine Länge von 5 m und eine lichte Weite von 80 mm und ist mit Raschigringen 8 x 8 mm gefüllt. In die Kolonnenblase wird reines Zielprodukt vorgelegt und die Blasentemperatur bei 140°C gehalten. Unumgesetzter, am Kopf der Kolonne kondensierender Alkohol wird über ein Tauchrohr in den Reaktor geleitet, der auf einer Temperatur von 60°C gehalten wird. Über einen zweiten mengengesteuerten Durchflußmesser werden 40 Mol 2-Methyl-3-chlorpropyl-cyclohexyldichlorsilan durch das zweite Tauchrohr in den Reaktor dosiert. Dem Reaktor ständig entnommenes Rohprodukt wird auf den Kopf der Kolonne aufgegeben und den aufsteigenden Alkoholdämpfen entgegengeführt. Aus der Kolonnenblase wird kontinuierlich das gewünschte Produkt abgezogen.
Die Struktur der neuen Verbindung wurde durch Elementar- und GC/MS-Analyse identifiziert.

| | | |
|---|---|---|
| Molekulargewicht: | theoretisch | 292,5 g/mol |
| | gefunden | 287,1 g/mol |

| | | |
|---|---|---|
| Elementaranalyse: | theoretisch | gefunden |
| C | 57,4 Gew.-% | 57,7 Gew.-% |
| H | 9,9 Gew.-% | 10,2 Gew.-% |
| Si | 9,6 Gew.-% | 9,3 Gew.-% |
| Cl | 12,2 Gew.-% | 12,0 Gew.-% |
| O | 10,9 Gew.-% | 10,8 Gew.-% |

Das vorliegende Produkt besitzt demzufolge die Formel

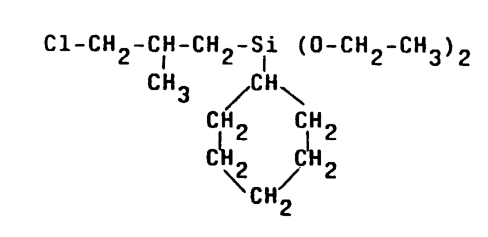

## Patentansprüche

1. 2-Methyl-3-chlorpropyl-cycloheryldialkoxysilane der allgemeinen Formel I 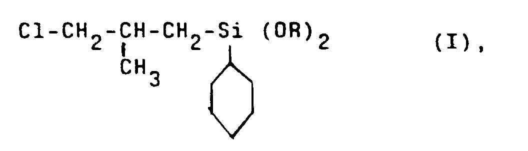 in welcher R für Alkylreste mit 1 bis 6 C-Atomen steht, die gegebenenfalls Sauerstoffatome in der Kette enthalten.

2. Verfahren zur Herstellung der 2-Methyl-3-chlorpropyl-cyclohexyldialkoxysilane gemäß Anspruch 1, dadurch gekennzeichnet, daß man in an sich bekannter Weise 2-Methyl-3-chlorpropyl-cyclohexyldichlorsilan mit den entsprechenden Alkoholen zur Umsetzung bringt.

## Claims

1. 2-methyl-3-chloropropylcyclohexyldialkoxysilanes of the general formula I 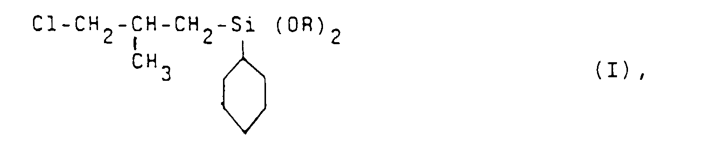 in which R stands for alkyl radicals which contain 1 to 6 C atoms, which optionally contain oxygen atoms in the chain.

2. Process for the preparation of 2-methyl-3-chloropropylcyclohexyldialkoxysilanes according to Claim 1, characterized in that 2-methyl-3-chloropropylcyclohexyldichlorosilane is reacted with the corresponding alcohols in a manner known per se.

## Revendications

1. 2-méthyl-3-chloropropyl-cyclohexyldialcoxysilanes de formule générale I, 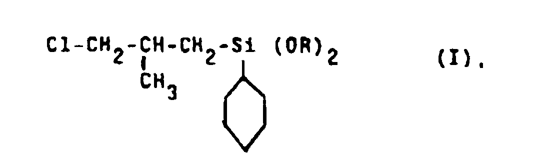 où R représente des radicaux alkyles de 1 à 6 atomes de C, qui contiennent le cas échéant des atomes d'oxygène dans la chaîne.

2. Procédé de préparation des 2-méthyl-3-chloropropyl-cyclohexyldialcoxysilanes selon la revendication 1, caractérisé en ce qu'on fait réagir de manière connue le 2-méthyl-3-chloropropyl-cyclohexyldichlorosilane avec les alcools correspondants.
